Europäisches Patentamt

European Patent Office

Office européen des brevets

(11) Veröffentlichungsnummer: **0 275 476 B1**

# (12) EUROPÄISCHE PATENTSCHRIFT

(45) Veröffentlichungstag der Patentschrift: **09.09.92**

(21) Anmeldenummer: **87118482.6**

(22) Anmeldetag: **14.12.87**

(51) Int. Cl.⁵: **B01D 19/04**, C11D 3/00

---

(54) **Antischaummittel für Polymerdispersionen.**

---

(30) Priorität: **22.12.86 DE 3643896**

(43) Veröffentlichungstag der Anmeldung:
**27.07.88 Patentblatt 88/30**

(45) Bekanntmachung des Hinweises auf die
Patenterteilung:
**09.09.92 Patentblatt 92/37**

(84) Benannte Vertragsstaaten:
**AT BE CH DE ES FR GB GR IT LI LU NL SE**

(56) Entgegenhaltungen:
EP-A- 0 124 815          EP-A- 0 213 518
EP-A- 0 242 729          FR-A- 1 551 599
FR-A- 1 551 599          GB-A- 2 158 080

(73) Patentinhaber: **Henkel Kommanditgesellschaft
auf Aktien
Postfach 1100 Henkelstrasse 67
W-4000 Düsseldorf-Holthausen(DE)**

(72) Erfinder: **Höfer, Rainer, Dr.
Klever Strasse 31
W-4000 Düsseldorf(DE)**
Erfinder: **Schmid, Karl-Heinz, Dr.
Stifterstrasse 1
W-4020 Mettmann(DE)**
Erfinder: **Asbeck, Adolf
Am Langen Weiher 51
W-4000 Düsseldorf 13(DE)**
Erfinder: **Held, Uwe
Emil-Schniewind-Strasse 5
W-5620 Velbert 15(DE)**

## Beschreibung

Die Erfindung betrifft die Verwendung bestimmter endgruppenverschlossener Alkylpolyethylenglykolether in wäßrigen Polymerdispersionen und Latices, um diesen bestimmte Eigenschaften zu verleihen, die in mehrfacher Hinsicht gewünscht und vorteilhaft sind.

Gegenstand der DE-A-33 15 951 ist die Verwendung von Polyethylenglykolethern der nachfolgenden Formel

$$R_1\text{-O-}(CH_2CH_2O)_n\text{-}R_2 \quad,$$

in der $R_1$ einen geradkettigen oder verzweigten Alkyl- oder Alkenylrest mit 8 - 18 C-Atomen, $R_2$ einen Alkylrest mit 4 bis 8 C-Atomen und n eine Zahl von 7 bis 12 bedeuten, als schaumdrückende Zusätze für schaumarme Reinigungsmittel. Der Einsatzzweck wird insbesondere in Reinigungsmitteln für Gewerbe und Industrie gesehen, die beispielsweise die Reinigung von Metall-, Glas-, Keramik- und Kunststoffoberflächen umfaßt. Gegenüber bekannten schaumdrückenden Zusätzen auf Basis von Anlagerungsprodukten von Alkylenoxiden anorganischer Verbindungen mit reaktiven Wasserstoffatomen im Molekül - wie sie beispielsweise aus den DE-A-1 280 455, DE-A-1 621 592, DE-A-1 289 597, DE-A-1 621 593 und 1 944 569 bekannt sind - zeichnen sich die Verbindungen der allgemeinen Formel I dadurch aus, daß sie zusätzlich biologisch abbaubar sind, nach den gesetzlichen Bestimmungsmethoden liegt ihre biologische Abbaubarkeit bei über 80 % BiAS-Abnahme.

Die DE-A-33 15 951 beschreibt darüber hinaus den Einsatz der Polyethylenglykolether der allgemeinen Formel I in Abmischung mit Polyethylenglykolethern, wie sie durch Anlagerung von 4 bis 20 Gewichtsteilen Ethylenoxid an 1 Gewichtsteil Polyglycerin mit einer Hydroxylzahl von 900 bis 1200 und anschließende Veretherung der freien Hydroxylgruppen mit Alkylhalogeniden mit 4 bis 8 Kohlenstoffatomen erhalten werden. Die Herstellung solcher Polyglycerin/Ethylenoxidether und ihre Verwendung ist Gegenstand der DE-A-33 15 952.

Gegenüber diesem Stand der Technik, der sich mit Reinigungsmittelgemischen beschäftigt, geht die vorliegende Erfindung von der Aufgabe aus, bestimmte Verbesserungen in wäßrigen Polymerdispersionen bzw. Latices einzustellen. Wäßrige Polymerdispersionen und entsprechende Latices, die durch Emulsionspolymerisation gewonnen werden, haben bekanntlich in der Technik vielfaltige Einsatzzwecke, so finden sie beispielsweise als Bindemitteldispersionen Verwendung, die bei Transport, Lagerung und Einssatzzweck den unterschiedlichsten Beanspruchungen ausgesetzt werden. Polymerdispersionen der geschilderten Art sind an sich hochsensible instabile 2-Phasen-Systeme, die unter den geschilderten Anwendungsbedingungen der Praxis zahlreichen destabilisierenden Einflüssen unterworfen sind. Ihre Stabilisierung - d.h. insbesondere die Verhinderung eines unerwünschten Aufrahmens oder Koagulierens - stellt für den Polymerfachmann einen komplexen Kreis von Problemen dar, zu dem die vielgestaltigsten Lösungsvorschläge gemacht worden sind. Polymerdispersionen bzw. -emulsionen der geschilderten Art müssen beispielsweise gegen Koagulation durch Gefrier- und Auftaueinflüsse, Elektrolytzugaben oder die bei der Formulierung zu Dispersionsfarben, Beschichtungsmitteln, Dispersionsputzen, Lederzurichtungen, Polituren, Klebstoffen, Textilhilfsmitteln oder andere dem Fachmann bekannte Einsatzgebiete auftretenden Scher- und sonstige Kräfte geschützt werden. Für diese Stabilisierungsaufgaben werden meistens nichtionogene Tenside, wie Fettalkohol-, Fettsäure-, Alkylphenol-oder Fettaminpolyglykolether eingesetzt, die aber in der Regel die Schaumentwicklung im System fördern und vielfach biologisch auch nicht befriedigend abbaubar sind.

Allgemein gilt, daß gerade für die Anwendung bei der Emulsionspolymerisation laufend neue oberflächenaktive Mittel gesucht werden, welche günstige Eigenschaften aufweisen und zwar sowohl bei Herstellung der Emulsion als auch während der Polymerisation und insbesondere hinsichtlich der Eigenschaften des entstehenden Polymerlatex. Dies gilt umso mehr, als es dem Fachmann nicht möglich ist, aus dem chemischen Aufbau eines oberflächenaktiven Mittels auch auf seine Eigenschaften als Polymerisationsemulgator bzw. -stabilisator zuverlässige Rückschlüsse zu ziehen.

Gegenstand der Erfindung ist dementsprechend in einer ersten Ausführungsform die Verwendung von Verbindungen der allgemeinen Formel I

$$R_1\text{-}(CH_2)_m\text{-O-}(CH_2CH_2O)_n\text{-}R_2 \qquad (I) \quad,$$

in der $R_1$ einen Phenylrest, der durch geradkettige oder verzweigte Alkylreste mit insgesamt 1 bis 30 C-Atomen substituiert sein kann, $R_2$ einen Alkylrest mit 4 bis 8 C-Atomen, m die Zahlen 0 oder 1 und n eine Zahl von 3 bis 30 bedeuten, in wäßrigen Polymerdispersionen und Latices als emulgierender und/oder

EP 0 275 476 B1

emulsionsstabilisierender,biologisch abbaubarer Bestandteil mit Schaumdämpfungsvermögen.

In der vorliegenden Formel kann $R_1$ einen Phenylrest oder einen monoalkylierten oder mehrfachalkylierten Phenylrest darstellen, in denen die Alkylreste bevorzugt 3 bis 18 C-Atome aufweisen. Bevorzugt soll die Summe der in den Alkylresten enthaltenden C-Atome 24 nicht überschreiten.

Der Rest $R_1$-$(CH_2)_m$- kann somit die folgende Bedeutung haben:

Monoalkylphenyl oder Monoalkylbenzyl

Dialkylphenyl oder Dialkylbenzyl

Trialkylphenyl oder Trialkylbenzyl

Tetraalkylphenyl oder Tetraalkylbenzyl

Pentaalkylphenyl oder Pentaalkylbenzyl

mit $C_{1-18}$-Alkylresten, die insgesamt bis zu 30 C-Atome enthalten. Bevorzugt sind Reste, in denen m = 0 und die Summe der C-Atome in den Alkylresten 8 bis 24 beträgt. Beispiele hierfür sind folgende Reste:

a) Tripropylphenyl

b) n-Octylphenyl

c) Isooctylphenyl

d) n-Nonylphenyl

e) Isononylphenyl

f) n-Dodecylphenyl

g) Isododecylphenyl

h) Di-n-octylphenyl

i) Di-isooctylphenyl

k) Di-n-nonylphenyl

l) Di-iso-nonylphenyl

m) Di-n-dodecylphenyl

n) Di-iso-dodecylphenyl

Unter den vorgenannten Verbindung sind die mit den Substituenten (c), (e) und (g) besonders bevorzugt.

Erfindungsgemäß können diese Verbindungen der allgemeinen Formel I schon bei der Emulsionspolymerisation zugegen sein und hier als Emulgatoren oder Coemulgatoren gegebenenfalls in Kombination mit anderen Emulgatoren, beispielsweise anionischen Emulgatoren Verwendung finden. Ebenso ist es aber auch möglich, die Verbindung der allgemeinen Formel I nachträglich fertigen Polymerdispersionen bzw. Latices als zusätzliches Stabilisierungsmittel zuzugeben. Verständlicherweise können diese Maßnahmen auch miteinander verbunden werden.

Zur Herstellung der erfindungsgemäß eingesetzten Verbindungen der allgemeinen Formel I wird auf die bereits zitierte DE-A-33 15 951 verwiesen. Als Ausgangsmaterial für die Herstellung dieser Polyglykolether können die Alkylphenole oder alkylierten Benzylalkohole einzeln oder im Gemisch eingesetzt werden. Die Umsetzung mit Ethylenoxid erfolgt im Molverhältnis von 1 : 3 bis 1 : 30. Anschließend werden die im erhaltenen Reaktionszwischenprodukt vorhandenen Hydroxylgruppen verethert. Die Umsetzung mit Ethylenoxid erfolgt dabei unter den bekannten Alkoxylierungsbedingungen, vorzugsweise in Gegenwart von geeigneten alkalischen Katalysatoren. Die Veretherung der freien Hydroxylgruppen wird bevorzugt unter den bekannten Bedingungen der Williamsonschen Ethersynthese mit geradkettigen oder verzweigten $C_4$-$C_8$-Alkylhalogeniden durchgeführt, beispielsweise mit n-Butyliodid, sec.-Butylbromid, tert.-Butylchlorid, Amylchlorid, tert.-Amylbromid, n-Hexylchlorid, n-Heptylbromid und n-Octylchlorid. Dabei kann es zweckmäßig sein, Alkylhalogenid und Alkali im stöchiometrischen Überschuß, beispielsweise von 100 bis 200 %, über die zu veretherenden Hydroxylgruppen einzusetzen.

In einer besonders bevorzugten Ausführungsform der Erfindung werden Polyglykolether der Formel I eingesetzt, in der n eine Zahl von 5 bis 20 bedeutet. Besonders bevorzugt ist weiterhin die Verwendung von Verbindungen der Formel I, in der $R_2$ den n-Butylrest bedeutet und n = 7 - 16 ist.

In einer weiteren Ausgestaltung der Erfindung können die Polyglykolether der allgemeinen Formel I in Kombination mit Polyethylenglykolethern eingesetzt werden, wie sie in der eingangs genannten DE-A-33 15 952 beschrieben sind. Hierbei handelt es sich um Polyethylenglykoletherprodukte, die durch Anlagerung von 4 bis 20 Gew.-Teilen Ethylenoxid an 1 Gew.-Teil Polyglycerin mit einer Hydroxylzahl im Bereich von 900 bis 1200 und anschließende Veretherung der freien Hydroxylgruppen mit Alkylhalogeniden mit 4 bis 8 C-Atomen erhalten werden. Das Gewichtsverhältnis zwischen den Polyglykolethern der allgemeinen Formel I mit den endgruppenverschlossenen Polyglycerinpolyglykolethern kann im Bereich von 1 : 1 bis 9 : 1 und insbesondere solche im Bereich von etwa 2,5 : 1 bis 9 : 1 liegen. Diese Gemische zeichnen sich ebenfalls durch starke schaumdrückende Wirkung aus und erfüllen die gesetzlichen Anforderungen an die biologische Abbaubarkeit. Die erfindungsgemäß eingesetzten Polyglykolether bzw. Polyglykolethergemische zeichnen sich weiterhin durch Alkali- und Säurestabilität aus.

Im praktischen Einsatz enthalten die Polymerdispersionen bzw. Latices die Verbindungen der allgemeinen Formel I bzw. ihre Abmischungen mit den Polyglycerinethern üblicherweise in Mengen von etwa 0,05 bis 5 Gew.-%, bezogen auf die Trockenmasse der Dispersion. Mengen im Bereich von etwa 0,5 bis 3 Gew.-% können besonders bevorzugt sein.

**Beispiele**

Beispiel 1

Ein Isooctylphenol(7 EO)-n-Butyl-Mischether (Produkt A) wurde als entschäumender Zusatz an einer 50-prozentigen Terpolymer-Dispersion vom Typ VAc/VeoVa/AS geprüft. Die 50-prozentige Polymerdispersion enthält 33,0 Gewichtsteile (GT) Vinylacetat, 14,4 GT Versaticsäure-Vinylester (VeoVa 10) und 4,8 GT Acrylsäure und wurde mit einer Mischung aus einem Laurylethersulfobernsteinsäurehalbester-Di-Na-Salz und dem Kondensationsprodukt von Nonylphenol + 30 EO hergestellt.

Der beschriebene Mischether wurde im Vergleich zu einem handelsüblichen EO/PO-Blockcopolymer und dem Kondensationsprodukt von Nonylphenol + 10 EO nach der nachfolgend beschriebenen Prüfmethode getestet. Die beschriebenen Produkte wurden mit einer Zusatzmenge von 2 %, bezogen auf Trockenmasse Polymerdispersion, eingesetzt. Vergleichsweise wurde die Prüfung der Polymerdispersion ohne Zusätze als Standard (Nullversuch) durchgeführt. Die ermittelten Ergebnisse sind der Tabelle I zu entnehmen. Die Ergebnisse zeigen deutlich, daß durch Zusatz des beschriebenen Mischethers sehr gute Schaumzerfallseigenschaften gegenüber dem Nullversuch erzielt werden. Gegenüber dem Stand der Technik (EO/PO-Blockcopolymer) wird eine deutliche Verbesserung in der Schaumunterdrückung erzielt. Ein in der Praxis zur Stabilisierung von Polymerdispersionen zum Einsatz kommendes Nonylphenol + 10 EO führte sogar zu erhöhter Schaumbildung im Vergleich zum Standardversuch.

Beispiel 2

In Beispiel 2 (Tabelle II) wird die Wirkung unterschiedlicher Einsatzmengen von Produkt A gegenüber dem Standard (Nullversuch) verdeutlicht.

Bestimmung der Schaumeigenschaften wie Schaumentwicklung und Schaumzerfall nach der Freifallkreislaufmethode

Die Prüfung erfolgt an fertigen Polymerdispersionen.

Ausführung

50 g fertige Polymerdispersion werden mit 450 g vollentsalztem Wasser verdünnt und in einen 2-l-Meßzylinder mit Heizmantel überführt. Im Regelfall wird die Prüfung bei 25°C durchgeführt. Mit Hilfe einer Laborschlauchpumpe (Typ RG-L 85, Fa. Heidolph) wird die Prüfdispersion bei einer Durchflußmenge von 3 Liter pro Minute in einen ständigen Umlauf gebracht. Die Lösung wird mit einem Glasrohr vom Boden des Meßzylinders angesaugt und über ein zweites Glasrohr in freiem Fall zurückgeführt. Das zweite Glasrohr wird so in die Prüfeinrichtung eingebaut, daß sich der Auslauf in Höhe der 2000-ml-Markierung des Meßzylinders befindet. Nach 10 min. wird das maximale Schaumvolumen (Gesamtvolumen) abgelesen und der Umlauf beendet. In der Regel stellen sich Volumina von ca. 1600 bis 2100 ml ein.

In Zeitabständen von 0,5, 1, 2, 3, 5, 10 und 20 min. wird das Gesamtvolumen abgelesen und die ermittelten Werte in ein Volumina/Zeit-Diagramm eingetragen. Die so erhaltenen Werte geben eine Aussage über die Schaumeigenschaften der Polymerdispersion.

Die beschriebene Methode kann zur Prüfung des Einflusses entschäumender Substanzen bzw. schaumarmer Tenside auf deren Schaumeigenschaften angewandt werden. In diesem Fall wird von einer Polymerdispersion das Gesamtvolumen nach 10 min. Umlauf sowie der Schaumzerfall innerhalb der vorgegebenen Zeitintervalle ermittelt. Die gefundenen Werte stellen den Standard für die weiteren Prüfungen dar. Vergleichsweise wird ein Versuch mit der zu prüfenden Substanz durchgeführt. Die Dosierung der Prüfsubstanz zur Polymerdispersion erfolgt vor dem 10-minütigen Umlauf.

Die Dosiermengen liegen je nach Produkttyp zwischen 0,1 und 20 % Prüfsubstanz, bezogen auf Trockenmasse der Dispersion.

Die gefundenen Werte finden sich in Tabelle I.

EP 0 275 476 B1

T a b e l l e   I [xx)]

| Zusatz (Art/Menge bezogen auf Trockenmasse der Dispersion) | | Schaumzerfall in ml Schaumhöhe nach | | | | | |
|---|---|---|---|---|---|---|---|
| | | 0 min | 0,5 min | 3 min | 5 min | 10 min | 20 min |
| kein Zusatz | | 2000 | 2000 | 1800 | 1700 | 900 | 560 |
| Produkt A | 2 %[x)] | 2000 | 1900 | 1600 | 1250 | 500 | 400 |
| Nonylphenol 10 EO | 2 % | 2000 | 2000 | 1850 | 1800 | 1100 | 600 |
| handelsüblicher Entschäumer EO/PO-Addukt) | 2 % | 2000 | 2000 | 1800 | 1500 | 600 | 400 |

Tabelle II xx)

| Zusatz (Art/Menge bezogen auf Trockenmasse der Dispersion) | Schaumzerfall in ml Schaumhöhe nach | | | | | |
|---|---|---|---|---|---|---|
| | 0 min | 0,5 min | 3 min | 5 min | 10 min | 20 min |
| Produkt A 0,2 % | 2000 | 2000 | 1900 | 1800 | 1400 | 500 |
| Produkt A 1,0 % | 2000 | 1950 | 1800 | 1500 | 800 | 450 |
| Produkt A 2,0 % | 2000 | 1980 | 1700 | 1450 | 700 | 400 |
| Produkt A 10,0 % | 2000 | 1950 | 1600 | 1500 | 600 | 400 |
| kein Zusatz – | 2000 | 2000 | 1950 | 1850 | 1680 | 1150 |

x) bezogen auf Trockenmasse der Polymerdispersion
xx) Die Versuchsergebnisse sind nur innerhalb einer Versuchsreihe vergleichbar.

Beispiel 3

Weitere geprüfte Produkte
(C$_4$ bedeutet n-Butylether)

6

| Produkt | Chem. Zusammensetzung |
|---------|------------------------|
| B | Isononylphenol + 7,5 EO-$C_4$ |
| C | Isononylphenol + 8,0 EO-$C_4$ |
| D | Isononylphenol + 9,0 EO-$C_4$ |
| E | Isooctylphenol + 9,1 EO-$C_4$ |
| F | Isononylphenol + 10,0 EO-$C_4$ |
| G | Isododecylphenol + 16,0 EO-$C_4$ |

Alle Substanzen hatten etwa 100 % Aktivsubstanzgehalt.
Die Ergebnisse finden sich in Tabelle III.

7

## Tabelle III

| Zusatz (Art/Menge bezogen auf Trockenmasse der Dispersion) | | Schaumzerfall in ml Schaumhöhe nach | | | | | |
|---|---|---|---|---|---|---|---|
| | | 0 min | 0,5 min | 3 min | 5 min | 10 min | 20 min |
| kein Zusatz | – | 2000 | 2000 | 1800 | 1700 | 900 | 550 |
| Produkte B – G | 2 % | 2000 | 1900 – 2000 | 1600 – 1750 | 1350 – 1500 | 550 – 650 | 400 – 500 |
| Produkt A | 2 % | 2000 | 1900 | 1700 | 1300 | 530 | 400 |

Beispiel 4

Verwendung eines Isononylphenol + 10 EO-n-Butyl-Mischether (Produkt F) als Polymerisationsemulgator

8

Prüfrezeptur:

Zur Prüfung wurden pro Versuch 3 Lösungen hergestellt.

| Lösung 1 | |
|---|---|
| 1,3 g | Emulgator X (100 %ig) |
| 0,5 g | Kaliumperoxydisulfat |
| 0,2 g | Borax |
| 191,7 g | vollentsalztes Wasser |

| Lösung 2 | |
|---|---|
| 0,8 g | Emulgator X (100 %ig) |
| 2,1 g | Borax |
| 1,9 g | Kaliumperoxydisulfat |
| 12,0 g | Emulgator Y (100 %ig) |
| 288,4 g | vollentsalztes Wasser |

| Lösung 3 | |
|---|---|
| 330,1 g | Vinylacetat |
| 143,5 g | Versaticsäure-Vinylester |
| 4,8 g | Acrylsäure |
| 23,9 g | 10 %ige Ammoniumcarbonatlösung |

Beispiel 4.1(Vergleichsbeispiel)

Es wurde mit einer üblichen Kombination aus anionischen und nichtionischen Emulgatoren gearbeitet. Als anionischer Emulgator X wurde in Lösung 1 eine 33,4 %ige wäßrige Lösung eines Na-Fettsäuremethylestersulfonats, und in Lösung 2 als nichtionogener Emulgator Y ein 70 %iges Nonylphenol + 30 EO sowie weitere 0,8 g Aktivsubstanz des anionaktiven Emulgators X eingesetzt.

Beispiel 4.2(erfindungsgemäß)

In Lösung 2 wurde als nichtionogener Emulgator Y statt Nonylphenol + 30 EO das erfindungsgemäße Produkt A eingesetzt.

Bei allen Versuchen wurde die Gesamtmenge durch Zufügen oder Weglassen von Wasser auf 1000 g eingestellt.

Polymerisationsverfahren

Die Komponenten der Lösung 1 werden in das Reaktionsgefäß vorgelegt, mit Stickstoff gespült und auf 80°C geheizt. Während der Aufheizpause wird im Vorlagegefäß durch Zugabe der Monomerlösung 3 zur emulgatorhaltigen wäßrigen Phase Lösung 2 durch kräftiges Rühren eine Präemulsion hergestellt. Der pH-Wert der Präemulsion wird auf 3,8 bis 4,0 eingestellt. Bei Erreichen einer Reaktorinnentemperatur von 80°C wird mit der Dosierung der Monomerpräemulsion begonnen. Die Dauer der Dosierung beträgt 2 bis 2,5 Stunden. Nach beendeter Zugabe wird die Temperatur des Reaktionsgemisches weitere 2 Stunden bei 80°C gehalten. Die Dispersion wird abgekühlt und filtriert und der pH-Wert mit 23,9 g einer 10 %igen Ammoniumcarbonat-Lösung auf 7,0 bis 7,5 eingestellt, wozu die angegebenen Mengen an Ammoniumcarbonat-Lösung eingesetzt wurden.

Ergebnis:

Es wurden Dispersionen mit weniger als etwa 0,4 % Koagulat (bezogen auf Trockenmasse) erhalten. Die Dispersionen nach 4.2 waren schaumarm. So zeigte die Dispersion in der vorgeschilderten Meßanordnung nach 0,5 Minuten 1700 ml Schaumhöhe, nach 5 Minuten 800 ml und nach 10 Minuten nur mehr 480 ml.

Die Dispersion nach Vergleichsbeispiel 4.1 zeigte demgegenüber nach 0,5 Minuten 1900 ml Schaumhöhe, nach 5 Minuten 1500 ml und nach 10 Minuten noch 900 ml Schaumhöhe.

**Patentansprüche**

1. Verwendung von Verbindungen der allgemeinen Formel I

$$R_1\text{-}(CH_2)_m\text{-}O\text{-}(CH_2CH_2O)_n\text{-}R_2 \qquad (I) ,$$

in der $R_1$ einen Phenylrest, der durch geradkettige oder verzweigte Alkylreste mit insgesamt 1 bis 18 C-Atomen substituiert sein kann, $R_2$ einen Alkylrest mit 4 bis 8 C-Atomen, m die Zahlen 0 oder 1 und n eine Zahl von 3 bis 30 bedeuten, in wäßrigen Polymerdispersionen und Latices als emulgierender und/oder emulsionsstabilisierender, biologisch abbaubarer Bestandteil mit Schaumdämpfungsvermögen.

2. Verwendung nach Anspruch 1, dadurch gekennzeichnet, daß in der Formel I $R_1$ einen alkylierten Phenylrest darstellt, in dem die Alkylreste 3 bis 18 C-Atome und in ihrer Summe nicht mehr als 24 C-Atome aufweisen und m für 0 steht.

3. Verwendung nach den Ansprüchen 1 und 2, dadurch gekennzeichnet, daß in den Verbindungen der allgemeinen Formel I n eine Zahl von 5 bis 20 und insbesondere von 7 - 16 bedeutet und daß $R_2$ den n-Butylrest bedeutet.

4. Verwendung nach Anspruch 1 bis 3, dadurch gekennzeichnet, daß die Verbindungen der Formel I
   a) ganz oder teilweise schon bei der Emulsionspolymerisation zugegen sind und/oder
   b) der fertigen Polymerdispersion zugegeben werden.

5. Verwendung nach Ansprüchen 1 bis 4, dadurch gekennzeichnet, daß die Verbindungen der Formel I bei der Emulsionspolymerisation als nicht-ionogene Emulgatoren oder Co-Emulgatoren verwendet werden.

6. Verwendung nach Ansprüchen 1 bis 5, dadurch gekenn-zeichnet, daß die Verbindungen der allgemeinen Formel I im Gemisch zusammen mit Polyethylenglykolethern verwendet werden, die durch Anlagerung von 4 bis 20 Gewichtsteilen Ethylenoxid an 1 Gewichtsteil Polyglycerin mit einer Hydroxylzahl von 900 bis 1200 und anschließende Veretherung der freien Hydroxylgruppen mit Alkylhalogeniden mit 4 bis 8 C-Atomen erhalten worden sind, wobei vorzugsweise Gewichtsverhältnisse der Verbindungen der allgemeinen Formel I zu den Polyglycerinverbindungen im Bereich von etwa 1 : 1 bis 9 : 1 verwendet werden.

7. Verwendung nach Ansprüchen 1 bis 6, dadurch gekennzeichnet, daß die Verbindungen der allgemeinen Formel I in den Polymerdispersionen bzw. Latices in Mengen von 0,05 bis 5 Gew.-%, vorzugsweise in Mengen von 0,5 bis 3 Gew.-% - jeweils bezogen auf die Trockenmasse der Dispersion - vorliegen.

**Claims**

1. The use of compounds corresponding to the following general formula

$$R_1\text{-}(CH_2)_m\text{-}O\text{-}(CH_2CH_2O)_n\text{-}R_2 \qquad (I)$$

in which $R_2$ is a phenyl radical which may be substituted by linear or branched alkyl radicals containing in all 1 to 18 carbon atoms, $R_2$ is a $C_{4-8}$ alkyl radical, m = 0 or 1 and n = 3 to 30, in aqueous polymer dispersions and latices as an emulsifying and/or emulsion-stabilizing, biologically degradable constituent with foam-inhibiting properties.

EP 0 275 476 B1

2. The use claimed in claim 1, characterized in that, in formula I, $R_1$ is an alkylated phenyl radical in which the alkyl radicals contain from 3 to 18 carbon atoms and, in all, no more than 24 carbon atoms and m = 0.

3. The use claimed in claims 1 and 2, characterized in that, in the compounds corresponding to general formula I, n is a number of from 5 to 20 and more especially from 7 to 16 and $R_2$ is the n-butyl radical.

4. The use claimed in claims 1 to 3, characterized in that the compounds corresponding to formula I
    a) are completely or partly present during the emulsion polymerization and/or
    b) are added to the prepared polymer dispersion.

5. The use claimed in claims 1 to 4, characterized in that the compounds corresponding to formula I are used as nonionic emulsifiers or co-emulsifiers during the emulsion polymerization.

6. The use claimed in claims 1 to 5, characterized in that the compounds corresponding to general formula I are used in admixture with polyethylene glycol ethers which have been obtained by addition of 4 to 20 parts by weight ethylene oxide onto 1 part by weight polyglycerol having a hydroxyl value of 900 to 1200 and subsequent etherification of the free hydroxyl groups with $C_{4-8}$ alkyl halides, the compounds corresponding to general formula I preferably being used in a ratio by weight to the polyglycerol compounds of about 1:1 to 9:1.

7. The use claimed in claims 1 to 6, characterized in that the compounds corresponding to general formula I are present in the polymer dispersions or latices in quantities of 0.05 to 5% by weight and preferably in quantities of 0.5 to 3% by weight, based in each case on dispersion dry matter.

**Revendications**

1. Utilisation de composés de formule générale I

   $R_1$ -$(CH_2)_m$-O-$(CH_2CH_2O)_n$-$R_2$     (I) ,

   dans laquelle $R_1$ représente un radical phényle qui peut être substitué par des groupes alkyle à chaînes droites ou ramifiées, ayant au total de 1 à 18 atomes de carbone, $R_2$ représente un radical alkyle ayant de 4 à 8 atomes de carbone, m représente le nombre 0 ou 1 et n représente un nombre de 3 à 30, dans des latex et dispersions aqueuses de polymères, en tant que composant émulsifiant et/ou stabilisateur d'émulsion, biologiquement dégradable, à pouvoir antimousse.

2. Utilisation selon la revendication 1, caractérisée en ce que, dans la formule I, $R_1$ représente un radical phényle alkylé dans lequel les radicaux alkyle ont de 3 à 18 atomes de carbone et au total n'ont pas plus de 24 atomes de carbone, et m est 0.

3. Utilisation selon les revendications 1 et 2, caractérisée en ce que, dans les composés de formule générale I, n représente un nombre allant de 5 à 20 et en particulier de 7 à 16, et en ce que $R_2$ représente le radical n-butyle.

4. Utilisation selon l'une quelconque des revendications 1 à 3, caractérisée en ce que les composés de formule I
    a) sont en partie ou en totalité déjà présents lors de la polymérisation en émulsion et/ou
    b) sont ajoutés à la dispersion finale de polymère.

5. Utilisation selon l'une quelconque des revendications 1 à 4, caractérisée en ce que les composés de formule I sont utilisés, dans la polymérisation en émulsion, en tant qu'émulsifiants ou coémulsifiants non ioniques.

6. Utilisation selon l'une quelconque des revendications 1 à 5, caractérisée en ce que l'on utilise les composés de formule I en mélange conjointement avec des polyéthylèneglycoléthers, qui ont été obtenus par fixation de 4 à 20 parties en poids d'oxyde d'éthylène sur 1 partie en poids de polyglycérol ayant un indice d'hydroxy de 900 à 1200 et éthérification subséquente des groupes

11

hydroxy libres par des halogénures d'alkyle ayant de 4 à 8 atomes de carbone, en utilisant de préférence des rapports pondéraux des composés de formule générale I aux composés de polyglécérol dans la plage allant d'environ 1 : 1 à 9 : 1.

7. Utilisation selon l'une quelconque des revendications 1 à 6, caractérisée en ce que les composés de formule générale I sont présents dans les latex ou dispersions de polymères en quantités allant de 0,05 à 5% en poids, de préférence en quantités allant de 0,5 à 3% en poids, dans chaque cas par rapport à la matière sèche de la dispersion.